# EUROPEAN PATENT SPECIFICATION

(11) **EP 3 104 220 B1**
(45) Date of publication and mention of the grant of the patent: **29.08.2018**
(21) Application number: 16160728.8
(22) Date of filing: 16.03.2016
(51) Int. Cl.: G02F 1/13357, G02F 1/1333, G09G 3/34, G09G 3/36

(54) **LIQUID CRYSTAL DISPLAY DEVICE FOR A TWO-SIDED DISPLAY**
FLÜSSIGKRISTALLANZEIGE ZUR ZWEISEITIGEN BILDWIEDERGABE
SYSTÈME D'AFFICHAGE AUX CRISTAUX LIQUIDES POUR FAIRE UN AFFICHEUR DOUBLE FACE

(30) Priority: 09.06.2015 KR 20150081236
(43) Date of publication of application: 14.12.2016
(73) Proprietor: Samsung Electronics Co., Ltd., Gyeonggi-do 16677 (KR)
(72) Inventor: MIN, Kwan Sik, 15866 Gyeonggi-do (KR); LEE, Arum, 26382 Gangwon-do (KR); JEON, Keun Bae, 16534 Gyeonggi-do (KR); SOHN, Sang Hyun, 16509 Gyeonggi-do (KR); YANG, Sung Bok, 16700 Gyeonggi-do (KR)
(74) Representative: Taor, Simon Edward William

(56) References cited:
- WO-A1-2014/173042
- US-A1- 2003 160 919
- US-A1- 2008 013 016

## Description

Apparatuses and methods of the disclosure relate to a display panel and a display apparatus, and for example to a display panel and a display apparatus which can display an image on both sides of the display panel.

A liquid crystal display (LCD) as well as an organic light emitting diode (OLED) may be used to achieve a transparent display. The OLED has been expected to serve as not only a transparent display but also a double-sided viewable display, but it will take long time to accomplish this expectation due to problems of materials and reliability.

In general, the LCD may be used to accomplish the transparent display through only an LCD panel, but is disadvantageously bulky since it cannot emit light by itself and thus needs a backlight unit (BLU) at a back thereof. However, it is possible to overcome such a bulky structure through a highly-transparent BLU having a fine pattern, and it is also possible to realize a transparent LCD viewable at one side.

To accomplish a transparent LCD viewable at both sides, two LCD panels, two highly-transparent BLUs and two driving boards are required. In this case, there are problems of lowering transparency and increasing material costs.

Double-sided LCDs are known in the prior art:
US 2003/160919 A1 discloses a liquid crystal display which is adapted to display two independently controlled images on both sides of the display in two distinct areas of the same liquid crystal panel which do not coincide. Two backlight units are arranged above and below the liquid crystal layer which do not overlap and whose fixed areas determine the areas in which the images are displayed. This document discloses the features of the preamble of claim 1.

WO 2014/173042 A1 discloses a liquid crystal display comprising two light sources arranged above and below a liquid crystal panel. Two different reflected images can be displayed to observers above and below the panel. This is achieved by means of barrier layers comprising alternating reflective and transmissive regions.

US 2008/013016 A1 discloses a liquid crystal display comprising two co-extensive backlight units which are arranged above and below a common transmissive liquid crystal panel. The backlight units are individually controlled to provide one image to an observer below the panel using the upper backlight or another image to an observer above the panel using the lower backlight. Both images make use of the entire backlight area.

An aspect of the invention is provide a display panel and a display apparatus for displaying an image on both sides of the display panel.

Another aspect is to provide a display panel and a display apparatus for displaying different images on both sides of the display panel through one liquid crystal display and two backlight units. A display apparatus according to the invention is defined in claim 9. According to the invention one liquid crystal display and two backlight units comprise a double-sided viewable display apparatus, thereby reducing volume and costs while providing a double-sided viewable function. Further, different images or one image are displayable on the areas, which do not overlap each other, at both sides, and it is thus convenient for different viewers to view different contents or one contents.

The first backlight unit may include a first light guide plate and a first light source, and the second backlight unit may include a second light guide plate and a second light source, the first light guide plate may have a pattern disposed on an area corresponding to the first area at the second side of the liquid crystal layer, and the second light guide plate may have a pattern disposed on an area corresponding to the second area at the first side of the liquid crystal layer. Thus, each light guide plate of two backlight units has patterns disposed on some areas, thereby achieving a double-sided viewable display.

The display panel according to the invention is defined in claim 1 and displays the first image and the second image on the first area and the second area respectively by turning on the area of the first backlight unit corresponding to the first area at the second side of the liquid crystal layer and turning on the area of the second backlight unit corresponding to the second area at the first side of the liquid crystal layer. Thus, a double-sided viewable display may achieved by turning on some areas of each of two backlight unit.

The display apparatus according to the invention further includes input circuitry configured to receive a user's input, wherein the display panel may modify the first area of the second side and the second area of the first side of the liquid crystal layer in response to an input. Thus, when images are displayed at both sides of the display, a user can view the images having desired sizes and displayed on desired areas.

The display panel may be configured to determine attributes (e.g., a type of image signal) of the first image signal and the second image signal, and may be configured to modify the first area of the second side and the second area of the first side of the liquid crystal layer in accordance with the attributes of the first image signal and the second image signal. Thus, in accordance with attributes (a moving image, a still image, a text, a menu, etc.) of images displayed on both sides of the display, the images may be displayed on areas suitable for the attributes having sizes suitable for the attributes.

A fourth area of the first side and a third area of the second side of the liquid crystal layer may overlap each other in a direction perpendicular to the first side and the second side, and the display panel may display different images on the third area and the fourth area by turning on an area of the first backlight unit and an area of the second backlight unit, which correspond to the third area and the fourth area, alternately in a cycle of predetermined time. Thus, the two backlight units may be alternately driven to display images on the liquid crystal display by, for example, time division, and it is therefore possible to view different images through the overlapped areas at both sides of the display.

A fourth area of the first side and a third area of the second side of the liquid crystal layer may overlap each other in a direction perpendicular to the first side and the second side, and the display panel may display one or more images or reversal images on the third area and the fourth area by turning on an area of the first backlight unit and an area of the second backlight unit, which respectively correspond to the third area and the fourth area. Thus, it is possible to view one or more images or images reversed left and right through the overlapped areas at both sides of the display.

A fourth area of the first side and a third area of the second side of the liquid crystal layer may overlap each other in a direction perpendicular to the first side and the second side, and the display panel may display an image on the third area or the fourth area by turning on only one of an area of the first backlight unit and an area of the second backlight unit, which respectively correspond to the third area and the fourth area. Thus, only one of two backlight units in the double-sided viewable display is turned on, and a single-side view is possible.

A fourth area of the first side and a third area of the second side of the liquid crystal layer may overlap each other in a direction perpendicular to the first side and the second side, and the display panel may use the third area or the fourth area to function as a transparent window by turning off an area of the first backlight unit and an area of the second backlight unit, which respectively correspond to the third area and the fourth area. Thus, while different images or one images are displayed at both sides of the display, a predetermined area at both sides may not display an image but function as a transparent window through which an exterior can be seen.

A fourth area of the first side and a third area of the second side of the liquid crystal layer may overlap each other in a direction perpendicular to the first side and the second side, and the display panel may turn off an area of the first backlight unit and an area of the second backlight unit, which respectively correspond to the third area and the fourth area, and may use external light to display images on the third area and the fourth area. Thus, in the double-sided viewable display, two backlight units may use external light to display images at both sides without being turned on.

The above and/or other aspects will become apparent and more readily appreciated from the following detailed description, taken in conjunction with the accompanying drawings, in which like reference numerals refer to like elements, and wherein:
FIG. 1 is a block diagram illustrating an example display apparatus with a display panel;
FIG. 2 is a cross-sectional view illustrating an example display panel;
FIG. 3 is a diagram illustrating an example of a display panel and a driver for driving the display panel;
FIG. 4 is a cross-sectional view illustrating an example display panel including one liquid crystal layer and two backlight units;
FIG. 5 is a diagram illustrating an example where images based on space-division are displayed on both sides of the display panel;
FIG. 6 is a cross-sectional view illustrating an example display panel including one liquid crystal layer and two backlight units;
FIG. 7 is a cross-sectional view illustrating an example display panel including one liquid crystal layer and two backlight units;
FIG. 8 is a diagram illustrating an example of images based on space-division and images based on time-division displayed on both sides of the display panel;
FIG. 9 is a diagram illustrating another example of images based on space-division and images based on time-division displayed on both sides of the display panel;
FIG. 10 is a cross-sectional view illustrating an example display panel including one liquid crystal layer and two backlight units;
FIG. 11 is a diagram illustrating an example of images based on space-division and one image displayed on both sides of the display panel;
FIG. 12 is a diagram illustrating an example of images based on space-division and reversal images displayed on both sides of the display panel;
FIG. 13 is a cross-sectional view of a display panel including one liquid crystal layer and two backlight units;
FIG. 14 is a diagram illustrating an example of images based on space-division displayed on both sides of a display apparatus and a single image displayed in a partial area on one side;
FIG. 15 is a cross-sectional view illustrating an example display panel including one liquid crystal layer and two backlight units;
FIG. 16 is a diagram illustrating an example of images based on space-division displayed on both sides of a display panel and a transparent window function performed in a partial area;
FIG. 17 is a diagram illustrating an example of a display panel for displaying images based on time-division on both sides thereof; and
FIG. 18 is an exploded view illustrating an example display panel for displaying images based on time-division on both sides thereof.

Below, example embodiments of the invention will be described in greater detail with reference to accompanying drawings. The disclosure may be achieved in various forms and is not limited to the following examples. For convenience of description, parts not directly related to the disclosure may be omitted, and like numerals refer to like elements throughout.

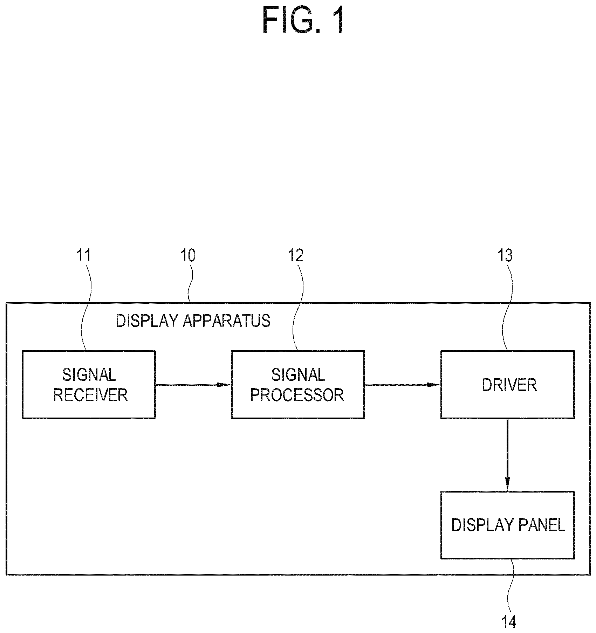

First, elements included in a display apparatus according to an example embodiment will be described in greater detail with reference to FIG. 1, and FIGs. 2 to 18 will be also referred to as necessary. FIG. 1 is a block diagram illustrating an example display apparatus with a display panel. As illustrated in FIG. 1, a display apparatus 10 may include a signal receiver (e.g., including receiver circuitry) 11, a signal processor 12, a driver (e.g., a display driver) 13, and a display panel 14, and may further include an element such as an input (not shown). The display apparatus 10 may further include additional elements without being limited to the elements illustrated. For example, the display apparatus 10 may be achieved by a television, a smart phone, a portable multimedia player (PMP), a netbook, a notebook computer, a display device for advertisement, etc.

The display apparatus 10 receives and processes a first image signal and a second image signal from a broadcasting station or an external apparatus, or the like. The display panel 14 of the display apparatus 10 includes a liquid crystal layer, a first backlight unit arranged at a first side of the liquid crystal layer, and a second backlight unit arranged at a second side opposite the first side of the liquid crystal layer. The display panel 14 allows light of the first backlight unit to enter the first side of the liquid crystal layer and exit a first area on the second side of the liquid crystal layer so as to display a first image signal. Further, the display panel 14 allows light of the second backlight unit to enter the second side of the liquid crystal layer and exit a second area of the first side of the liquid crystal layer so as to display a second image signal. The second area on the first side of the liquid crystal layer does not overlap the first area on the second side in a direction perpendicular to the first side and the second side. The display apparatus 10 uses one liquid crystal display and two backlight units to provide a double-sided viewable function, and thus advantageously becomes small in volume and is manufactured with low costs. Further, the display apparatus 10 is convenient for different users to view desired contents through both sides of the display since it can display different images or one images on both sides thereof.

According to an example embodiment, the display apparatus 10 may further include input circuitry, e.g., a user input, for receiving a user's input. In response to an input, the display panel 14 may adjust the first area on the second side of the liquid crystal layer and the second area on the first side. Thus, it is possible to provide more convenient viewing environments to a user since the user can adjust the positions and sizes of the areas for displaying images when the double-sided viewable function operates.

The display panel 14 of the display apparatus 10 may determine attributes of the first image signal and the second image signal. The attributes of the first image signal and the second image signal include, for example, a moving image, a still image, a text, a menu, etc., and the first area on the second side of the liquid crystal layer and the second area on the first side may be adjusted based on the attributes of the first and second image signals. In the double-sided viewable function of the display panel 14, a user can view a more natural image since the images are displayed on the areas having the position and size suitable for their attributes (a moving image, a still image, a text, a menu, etc.).

The signal receiver 11 may be configured to receive the first image signal and the second image signal. The signal receiver 11 may be variously realized, based, for example, on formats of the received image signal and the types of the display apparatus 10. For example, the signal receiver 11 may, for example, be realized by a tuner for receiving a radio frequency (RF) broadcast signal received from a broadcasting station or a satellite signal, or the like. The signal receiver 11 may, for example, receive an image signal from an external apparatus connected to the display apparatus 10, for example, a digital versatile disk (DVD) player or the like. The signal receiver 11 may be variously realized to receive an image signal without being limited to this example embodiment.

The signal processor 12 may be configured to perform a plurality of signal processes with regard to the first and second image signals received in the signal receiver 11. The plurality of signal processes may include, for example, removing crosstalk from an image signal, forward error correction (FEC), changing speed of automatic gain control (AGC) for an analog television (ATV)/digital television (DTV), changing an equalizer slope, changing a pilot size, changing a detection range for a symbol rate, phase tracking loop gain, changing a frequency, etc. but is not limited thereto in embodiments of the invention.

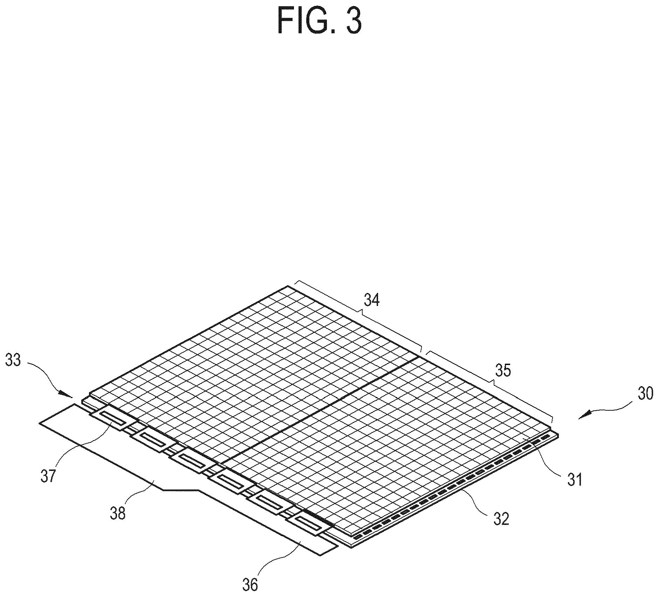

The driver 13 may be configured to drive a liquid crystal layer (not shown) of the display panel 14 to display the first and second image signals processed by the signal processor 12. The elements of the driver 13 will be described in greater detail below with reference to FIG. 3. As illustrated in FIG. 3, a driver 33 may include, for example, a gate driving integrated circuit (IC) 36, a data chip film package 37, and a printed circuit substrate 38. The gate driving IC 36 may be directly installed on a substrate for a display panel 30, and connected to the respective gate lines (not shown) of the display panel 30. The data chip film package 37 may include a tape automated bonding (TAB) tape where a semiconductor chip is bonded to a wiring pattern formed on a base film by a TAB technique. As an example of the chip film package, there may be used a tape carrier package (TCP), a chip on film (COF), etc. The printed circuit substrate 38 inputs a gate driving signal to the gate driving IC 36 and inputs a data driving signal to the data chip film package 37. With this configuration, the driver 33 respectively inputs driving signals to the gate lines (not shown) and the data lines (not shown) of the display panel 30, thereby driving the liquid crystal layer (not shown) in units of a pixel.

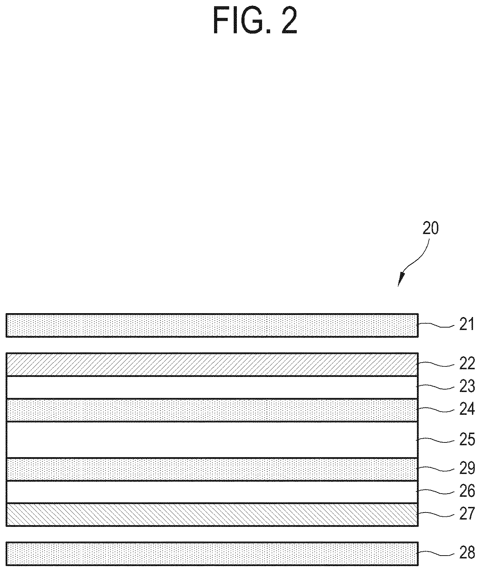

The display panel 14 is driven by the driver 13 to display a first image based on the first image signal processed by the signal processor 12 and a second image based on the second image signal. The display panel 14 includes the liquid crystal layer, the first backlight unit arranged at the first side of the liquid crystal layer, and the second backlight unit arranged at the second side opposite the first side of the liquid crystal layer. The display panel 14 will be described in greater detail below with reference to FIG. 2.

FIG. 2 is a cross-sectional view illustrating an example display panel. As illustrated in FIG. 2, a display panel 20 may include, for example, a first glass substrate 23 and a second glass substrate 26 which are arranged opposite each other; a liquid crystal layer 25, a pixel layer 24 and a color-filter layer 29 which are interposed in between the first glass substrate 23 and the second glass substrate 26; and a first polarization layer 22 and a second polarization layer 27 respectively arranged at an outer side of the first glass substrate 23 and an outer side of the second glass substrate 26 and facing each other. The display panel 20 additionally includes a first backlight unit 21 arranged to face one side of the first polarization layer 22 and emit light from a light source toward the liquid crystal layer 25, and a second backlight unit 28 arranged to face one side of the second polarization layer 27 and emit light from a light source toward the liquid crystal layer 25. The display panel 20 may for example also include an electrode layer (not shown) and the like additional elements. The elements related to this example embodiment will be discussed in the following description.

The first glass substrate 23 and the second glass substrate 26 are made of a transparent material for transmitting the light emitted from the first backlight unit 21 and the second backlight unit 28, respectively. The liquid crystal layer 25 is interposed in between the first glass substrate 22 and the second glass substrate 27 and includes liquid crystal of which array is oriented in units of a pixel based on a voltage applied thereto.

The liquid crystal layer 25 is placed between the first glass substrate 22 and the second glass substrate 27, and adjusts light transmission as the array of the liquid crystal is oriented in response to an applied driving signal. In accordance with various driving modes, the liquid crystal layer 25 may be achieved by a vertical alignment (VA) mode, a multi-domain vertical alignment mode (MVA), a patterned vertical alignment (PVA) mode, a twisted nematic (TN) mode, an in-plane switching (IPS) mode, etc. For a wide-view angle, the liquid crystal layer 25 may be improved by sectioning or patterning sub pixels, uniformizing a refractive index of liquid crystal, etc.

The first polarization layer 22 and the second polarization layer 27 are placed on an upper side of the first glass substrate 23 and a lower side of the second glass substrate 26, respectively. The first polarization layer 22 and the second polarization layer 27 may, for example, be realized by linear grids that transmit predetermined polarized light of incident light from the first backlight unit 21 and the second backlight unit 28 and reflect the other polarized light. The linear grid may be shaped like a plurality of bars arranged in on direction parallel with the first glass substrate 23 and the second glass substrate 26. The plurality of bars, which constitute the linear grid, are arranged to have a pitch of a preset interval. The linear grids protrude from each of the first polarization layer 22 and the second polarization layer 27 toward the liquid crystal layer 25. Thus, the first polarization layer 22 and the second polarization layer 27 are achieved by the linear grids to polarize a part of the incident light. The first polarization layer 23 and the second polarization layer 26 are not limited to the foregoing example embodiment, but may be variously realized to have the polarizing function in embodiments of the invention.

The pixel layer 24 is arranged on an upper surface of the liquid crystal layer 25. The pixel layer 24 has a structure of, for example, a thin film transistor (TFT) array, and controls an electrode to adjust a liquid crystal array of the liquid crystal layer 25 in units of a pixel. Each pixel includes a plurality of sub-pixels. According to an example embodiment, the sub-pixel refers to a smallest unit to which an image grayscale corresponding to red, green or blue is input, and a plurality of sub-pixels are grouped into a pixel as a unit for displaying an image signal.

The color-filter layer 29 is placed on a lower surface of the liquid crystal layer 25. The color-filter layer 29 provides red, green and blue (RGB) colors to the incident light emitted from the first backlight unit 21 and the second backlight unit 28 toward the liquid crystal layer 25. Each pixel of the liquid crystal layer 25 includes, for example, sub-pixels corresponding to RGB colors, and the color-filter layer 29 performs filtering corresponding to the color with regard to each sub-pixel. In this example embodiment, the color-filter layer 29 is interposed in between the liquid crystal layer 25 and the second glass substrate 26, but not limited thereto in embodiments of the invention. It will be understood that the position of the color-filter layer 29 may be changed.

The first backlight unit 21 is arranged at the upper side of the first polarization layer 22, and the light emitted from the first backlight unit 21 enters one surface of the liquid crystal layer 25 via the first glass substrate 23 and exits from the opposite surface of the liquid crystal layer 25 facing the second glass substrate 26. According to an example embodiment, the first backlight unit 21 may, for example, include the light source arranged at an edge of the display panel 20, a light guide plate arranged in parallel with and facing the first polarization layer 22, a reflection plate arranged at one side of the light guide plate, and one or more optical sheets interposed between the first polarization layer 22 and the light guide plate.

The second backlight unit 28 is placed at a lower side of the second polarization layer 27, and the light emitted from the second backlight unit 28 enters one surface of the liquid crystal layer 25 via the second glass substrate 26 and exits from the opposite surface of the liquid crystal layer 25 facing the first glass substrate 23. According to an example embodiment, the second backlight unit 28 may, for example, include the light source arranged at an edge of the display panel 20, a light guide plate arranged in parallel with and facing the second polarization layer 27, a reflection plate arranged at one side of the light guide plate, and one or more optical sheets interposed between the second polarization layer 27 and the light guide plate.

The light source is placed in at least one of the edges of the light guide plate, and may include a light emitting diode (LED) array, a cold cathode fluorescence lamp (CCFL), a hot cathode fluorescence lamp (HCFL), etc.

The light guide plate changes a traveling path of the light emitted from the light source, and guides the light to enter the liquid crystal layer 25 in the form of flat light. The light guide plate may be formed by a transparent panel made of acrylic or the like plastic material. A rear surface of the light guide plate may be formed with various patterns for making the light incident to the light guide plate travel toward the liquid crystal layer 25.

The reflection plate may be installed on the lower surface of the light guide plate and reflects the light exiting from the lower surface of the light guide plate upward. For example, light, which is not reflected from fine dot patterns formed on the rear of the light guide plate, is reflected again toward an exit surface of the light guide plate, thereby decreasing loss of light entering the liquid crystal layer 25 and improving uniformity of light exiting the exit surface of the light guide plate.

One or more optical sheets may be installed on the exit surface of the light guide plate, and serve to diffuse and collimate the light exiting the light guide plate. The optical sheet may include a diffusing sheet, a prism sheet, a protection sheet, etc. The diffusing sheet is positioned in between the light guide plate and the prism sheet, and diffuses the light exiting the light guide plate so as to prevent the light from being partially concentrated. The prism sheet includes, for example, predetermined solid prisms regularly arrayed on an upper surface thereof, and collimates the light diffused by the diffusing sheet so that the light can perpendicularly enter the liquid crystal layer 20. The protection sheet is formed on the prism sheet, thereby not only protecting the surface of the prism sheet but also uniformizing the light. According to an example embodiment, the edge-type backlight units are described as an example of the first backlight unit 21 and the second backlight unit 28, but are not limited thereto in embodiments of the invention. Direct-type backlight units may be employed as the first backlight unit 21 and the second backlight unit 28.

According to an example embodiment, the first backlight unit 21 makes the light enter the upper surface of the liquid crystal layer 25 and exit the lower surface of the liquid crystal layer 25 so that a displayed image can be seen. Further, the second backlight unit 28 makes the light enter the lower surface of the liquid crystal layer 25 and exit the upper surface of the liquid crystal layer 25 so that a displayed image can be seen. According to an example embodiment, images are displayable on both sides of the display panel 20, and it is thus convenient for two or more users to view different images through the opposite areas of the display apparatus.

For example, images displayed on both sides of the display panel 20 being illuminated by the first backlight unit 21 and the second backlight unit 28 may include different images, one image or reversal images. According to an alternative example, when images are displayed on both sides of the display panel 20 being illuminated by the first backlight unit 21 and the second backlight unit 28, images may be displayed in a full area or a partial area on each side of the display panel 20. In terms of the double-sided viewable display, the display panel 20 may be achieved in various forms without being limited to the foregoing examples.

FIG. 3 is a diagram illustrating an example of a display panel and a driver for driving the display panel. As illustrated in FIG. 3, a display panel 30 includes a pixel layer 31, a liquid crystal layer 32, etc. and the display panel 30 is connected to the driver 33. The elements of the display panel 30 are the same as those described with reference to FIG. 2, and thus repetitive descriptions thereof may be omitted, as necessary. Below, a method of driving the display panel 30 by the driver 33 will be described.

The pixel layer 31 includes a thin film transistor (TFT) array structure, and controls an electrode to adjust a liquid crystal array of the liquid crystal layer 32 in units of a pixel. Each pixel includes a plurality of sub-pixels. According to an example embodiment, the sub-pixel refers to a smallest unit to which an image grayscale corresponding to red, green or blue is input, and a plurality of sub-pixels are grouped into a pixel as a unit for displaying an image signal.

The driver 33 drives the liquid crystal layer 32 of the display panel 30 to display the first and second image signal processed by the signal processor 12 of FIG. 1. The driver 33 includes the gate driving IC 36, the data chip film package 37, and the printed circuit substrate 38. With this configuration, the driver 33 inputs driving signals to the respective gate and data lines of the display panel 30, thereby driving the liquid crystal layer 32 in units of a pixel of the pixel layer 31.

According to an example embodiment, the driver 33 may section the area of the liquid crystal layer 32 and drive each of the sectioned areas. If the display panel 30 is desired to display images based on the processed first and second image signals on either side thereof, the driver 33 drives a first area 34 of the liquid crystal layer 32 to display a first image based on the first image signal on one side of the first area 34. Further, the driver 33 drives a second area 35 of the liquid crystal layer 32 to display a second image based on the second image signal on another side of the second area 35. The first area 34 for displaying the first image and the second area 35 for displaying the second image are formed on different sides of the liquid crystal layer 32, and do not overlap each other in a direction perpendicular to the liquid crystal layer 32. For example, if the first image and the second image are desired to be displayed on different areas of the liquid crystal layer 32, the driver 33 sections the area on the liquid crystal layer 32 and drives the sectioned areas to respectively display images.

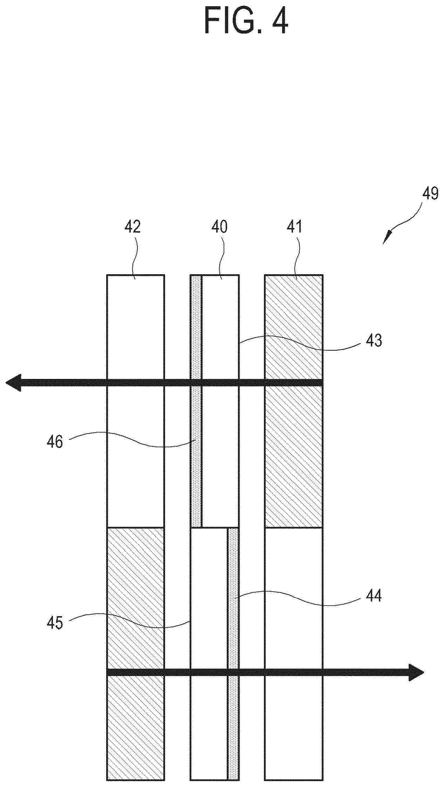

FIG. 4 is a cross-sectional view illustrating an example display panel including one liquid crystal layer and two backlight units. As illustrated in FIG. 4, a display panel 49 includes a liquid crystal layer 40, and a first backlight unit 41 and a second backlight unit 42 which are arranged at the opposite sides of the liquid crystal layer 40. According to an example embodiment, the liquid crystal layer 40 may be achieved by an LCD panel for displaying an image, and each of the first backlight unit 41 and the second backlight unit 42 may include a highly-transparent light guide plate (LGP) having a fine pattern and a light emitting diode (LED) used as a light source to thereby illuminate the LCD panel. A display panel 49 may display images on the sectioned areas at either side of the liquid crystal layer 40 by patterning parts of the light guide plates of the first backlight unit 41 and the second backlight unit 42.

The liquid crystal layer 40 is driven to selectively transmit light in response to the first image signal and the second image signal. The first backlight unit 41 is arranged at a first side 43 of the liquid crystal layer 40, so that light can enter the first side 43 of the liquid crystal layer 40 and exit a first area 46 of a second side 45 opposite the first side 43 of the liquid crystal layer 40. The second backlight unit 42 makes light enter the second side 45 of the liquid crystal layer 40 and exit a second area 44 of the first side 43 opposite the second side 45 of the liquid crystal layer 40. The second area 44 of the first side 43 and the first area 46 of the second side 45 do not overlap each other in a direction perpendicular to the first side 43 and the second side 45.

According to an example embodiment, the first backlight unit 41 includes a first light guide plate and a first light source, and the second backlight unit 42 includes a second light guide plate and a second light source. The first light guide plate may have a pattern on an area corresponding to the first area 46 at the second side 45 of the liquid crystal layer 40, and the second light guide plate may have a pattern on an area corresponding to the second area 44 at the first side 43 of the liquid crystal layer 40. The light from the first light source of the first backlight unit 41 enters the liquid crystal layer 40 through the patterned area of the first light guide plate, and the light from the second light source of the second backlight unit 42 enters the liquid crystal layer 40 through the patterned area of the second light guide plate. For example, by forming the patterns on the partial areas of the first light guide plate of the first backlight unit 41 and the second light guide plate of the second backlight unit 42, the first image signal and the second image signal can be respectively displayed as images on the areas, which do not overlap each other, at both sides of the liquid crystal layer 40. If the image is displayed on the partial patterned area of the light guide plate of the backlight unit, a part of displaying an image may be fixedly assigned at both sides of the display.

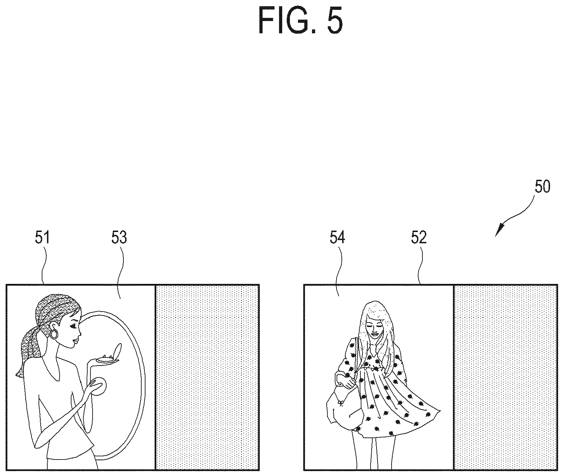

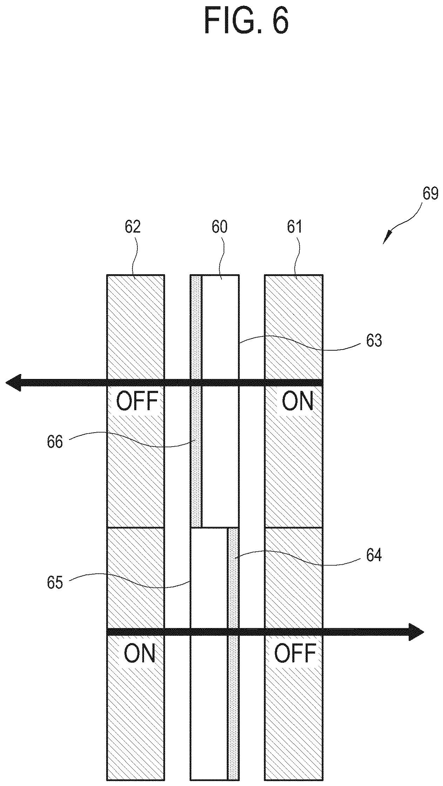

FIG. 5 is a diagram illustrating an example where images based on space-division are displayed on both sides of the display panel. As illustrated in FIG. 5, a second image may be displayed on a second area 53 at a first side 51 of the display panel 50, and a first image may be displayed on a first area 54 at a second side 52. According to an example embodiment, as illustrated in FIG. 4, a first image and a second image are displayed on the areas, which do not overlap each other, at both sides of the liquid crystal layer 40 by turning on both the first backlight unit 41 and the second backlight unit 42, and forming the patterns on the partial areas of the first light guide plate of the first backlight unit 41 and the second light guide plate of the second backlight unit 42. As illustrated in FIG. 6, a first image and a second image are displayed on the areas, which do not overlap each other, at both sides of the liquid crystal layer 40 by controlling power supplied to the first backlight unit 61 and the second backlight unit 62.

According to an example embodiment, images may be displayed on sectioned areas at both sides of the liquid crystal layer 40 by forming a partial pattern on the light guide plate or by controlling an area where power is supplied to the backlight unit.

FIG. 6 is a cross-sectional view illustrating an example display panel including one liquid crystal layer and two backlight units. As illustrated in FIG. 6, a display panel 69 can display a first image and a second image on a first area 66 and a second area 64 respectively by turning on an area of a first backlight unit 61 corresponding to the first area 66 at the second side 65 of the liquid crystal layer 60, and turning on an area of a second backlight unit 62 corresponding to the second area 64 at the first side 63 of the liquid crystal layer 60. In this manner, different images or one mage may be displayed at positions, which do not overlap each other, at both sides of the liquid crystal layer 60 by turning on the areas of the first backlight unit 61 and the second backlight unit 62 corresponding to the first area 66 and the second area 64 which do not overlap each other.

According to an example embodiment, the display panel 69 may adjust the first area 66 at the second side 65 and the second area 64 at the first side 63 of the liquid crystal layer 60 in response to a user's input. Such na input may include an input on a user interface for selecting areas where images will be displayed at both sides of the display panel 69. For example, the first area 66 and the second area 64 may, for example, be adjusted in response to an input, and the areas of the first and second backlight units 61 and 62 are powered on corresponding to the adjusted first and second areas 66 and 64, so that users can view images having desired positions and sizes at both sides of the display panel 69.

The display panel 69 may, for example, determine attributes of first and second image signals, and adjust the first area 66 at the second side 65 of the liquid crystal layer 60 and the second area 64 at the first side 63 based on the determined attributes of the first and second image signals. For example, the attributes of the first and second image signals may include a moving image, a still image, a text, a menu, etc. For example, the positions and sizes of the first and second areas 66 and 64 may be automatically adjusted in accordance with attributes of an image (a moving image, a still image, a text, a menu, etc.), so that a user can view an image more naturally.

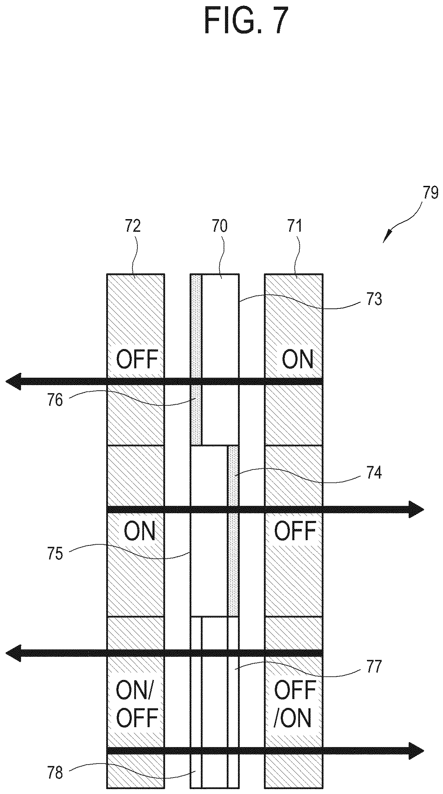

FIG. 7 is a cross-sectional view illustrating an example display panel including one liquid crystal layer and two backlight units. As illustrated in FIG. 7, at a first side 73 and a second side 75 of a liquid crystal layer 70, a display panel 79 may display images on partial areas, which do not overlap each other, by space-division, and display images on other areas, which overlap each other, by time-division. According to an example embodiment, the display panel 79 turns on an area of a first backlight unit 71 corresponding to a first area 76 at the second side 75 of the liquid crystal layer 70, and turns on an area of a second backlight unit 72 corresponding to a second area 74 at the first side of the liquid crystal layer 70, thereby respectively displaying the first image and the second image on both the first area 76 and the second area 74 by the space division. The second area 74 of the first side 73 and the first area 76 of the second side 75 do not overlap each other in a direction perpendicular to the first side 73 and the second side 75.

Further, the display panel 79 alternately turns on an area of the first backlight unit 71 and an area of the second backlight unit 72 respectively corresponding to a third area 78 at the second side 75 of the liquid crystal layer 70 and a fourth area 77 at the first side 73 in a cycle of predetermined time, thereby displaying different images on the third area 78 and the fourth area 77 at both sides by time-division. The fourth area 77 of the first side 73 and the third area 78 of the second side 75 overlap each other in a direction perpendicular to the first side 73 and the second side 75.

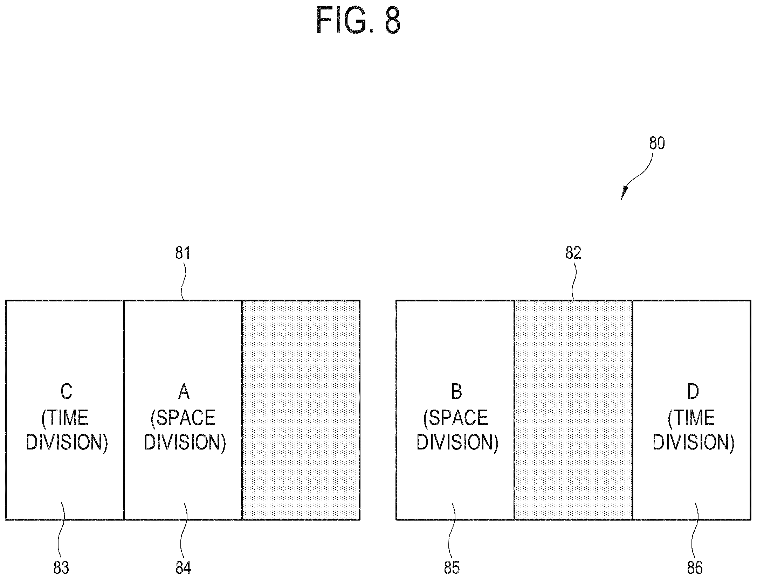

FIG. 8 is a diagram illustrating an example in which images based on space-division and images based on time-division are displayed on both sides of the display panel. As illustrated in FIG. 8, a display panel 80 may section a first side 81 and a second side 82 into three pairs of corresponding areas, and may use one area at either side thereof to display images based on time-division and the other two areas at either side thereof to display images based on space-division. According to an example embodiment, the display panel 80 may respectively display an image A and an image B on a second area 84 of a first side 81 and a first area 85 of a second side 82, which do not overlap each other, by space division. In this example, the area of the second backlight unit corresponding to the second area 84 of the first side 81 is turned on, and the area of the first backlight unit corresponding to the first area 85 of the second side 82 is turned on.

The display panel 80 may also respectively display an image C and an image D on a fourth area 83 of the first side and a third area 86 of the second side 82, which overlap each other, by time division. In this example, the area of the second backlight unit corresponding to the fourth area 83 of the first side 81 and the area of the first backlight unit corresponding to the third area 86 of the second side 82 are alternately turned on in a cycle of predetermined time. The display panel 80 according to an example embodiment may use space-division and time-division in displaying images at both sides of the display, and is convenient for users to view many images at both sides.

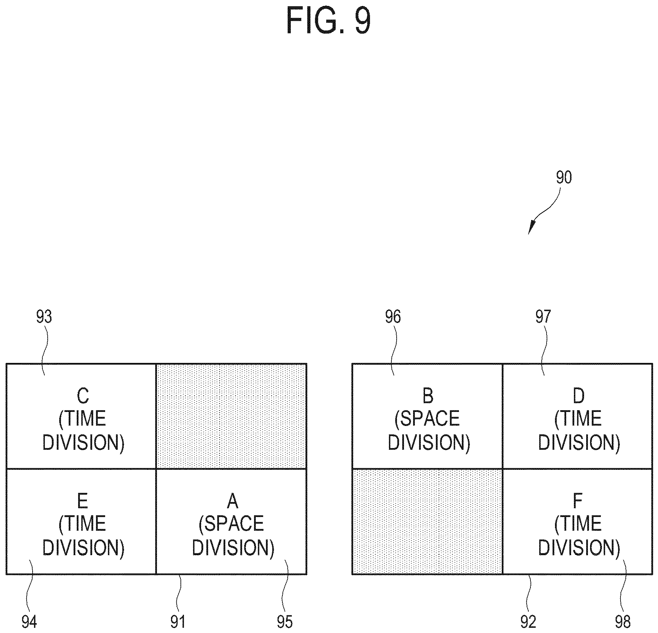

FIG. 9 is a diagram illustrating another example in which images based on space-division and images based on time-division are displayed on both sides of the display panel. As illustrated in FIG. 9, a display panel 90 may section a first side 91 and a second side 92 into four pairs of corresponding areas at corresponding positions, and may use two areas at either side thereof to display an image based on time-division and the other two areas at either side thereof to display an image based on space-division. According to an example embodiment, the display panel 90 may display an image A and an image B on a second area of a first side 91 and a first area 96 of a second side 92, which do not overlap each other, by space division.

The display panel 90 may also respectively display an image C and an image D on a fourth area 93 of a first side 91 and a third area 97 of a second side, which overlap each other, and an image E and an image F on a sixth area 94 of the first side 91 and a fifth area 98 of the second side 92, which overlap each other, by time division. Thus, the display panel 90 according to an example embodiment may have areas variously sectioned to display images at either side thereof, and display a plurality of images on the respective areas by space division or time-division.

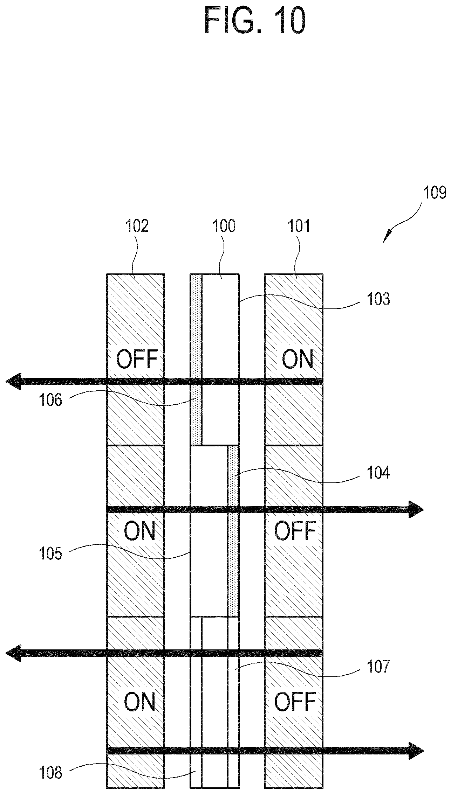

FIG. 10 is a cross-sectional view illustrating an example display panel including one liquid crystal layer and two backlight units. As illustrated in FIG. 10, a display panel 109 may display images on some areas at either side thereof, which do not overlap each other, by space division, and display one image or reversal images on the other areas at either side thereof, which overlap each other, in a first side 103 and a second side 105 of a liquid crystal layer 100. According to an example embodiment, the display panel 109 may display a first image and a second image on a first area 106 and a second area 104 by turning on the area of the first backlight unit 101 corresponding to the first area 106 at the second side 105 of the liquid crystal layer 100 and turning on the area of the second backlight unit 102 corresponding to the second area 104 at the first side 103 of the liquid crystal layer 100 in order to display the images at either side by space division. For example, the second area 104 of the first side 103 and the first area 106 of the second side 105 do not overlap each other in a direction perpendicular to the first side 103 and the second side 105.

The display panel 109 may display one image or reversal images on the third area 108 and the fourth area 107 by turning on the area of the first backlight unit 101 and the area of the second backlight unit 102 respectively corresponding to the third area 108 at the second side 105 and the fourth area 107 at the first side 103 of the liquid crystal layer 100 in order to display one image or reversal images at either side thereof. For example, the fourth area 107 of the first side 103 and the third area 108 of the second side 105 overlap each other in a direction perpendicular to the first side 103 and the second side 105.

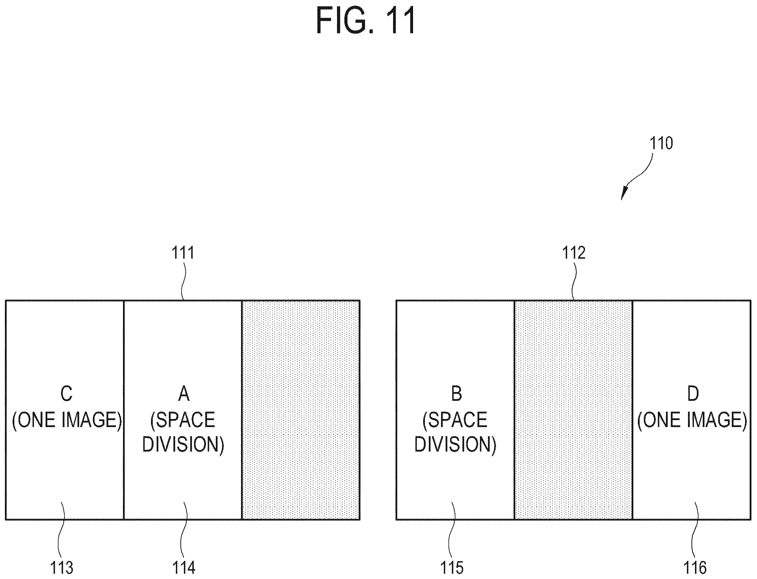

FIG. 11 is a diagram illustrating an example in which images based on space-division and one image are displayed on both sides of the display panel. As illustrated in FIG. 11, a display panel 110 may section a first side 111 and a second side 112 into three pairs of corresponding areas, and may display one image on one area among them at either side thereof and display different images on the other two areas at either side thereof by space division. According to an example embodiment, the display panel 110 may respectively display an image A and an image B on a second area 114 of the first side 111 and a first area 115 of the second side 112, which do not overlap each other, by space division. In this example, the area of the second backlight unit corresponding to the second area 114 of the first side 111 is turned on, and the area of the first backlight unit corresponding to the first area 115 of the second side 112 is turned on.

The display panel 110 may display one image C on a fourth area 113 of the first side 111 and a third area 116 of the second side 112, which overlap each other. In this example, the images C displayed on both sides are obtained by processing one image signal, and are realized by turning on both the area of the second backlight unit corresponding to the fourth area 113 of the first side 111 and the area of the first backlight unit corresponding to the third area 116 of the second side 112. In terms of displaying images on both sides of the display, the display panel 110 according to an example embodiment enables two or more users to respectively view their desired different images while viewing one image on both sides.

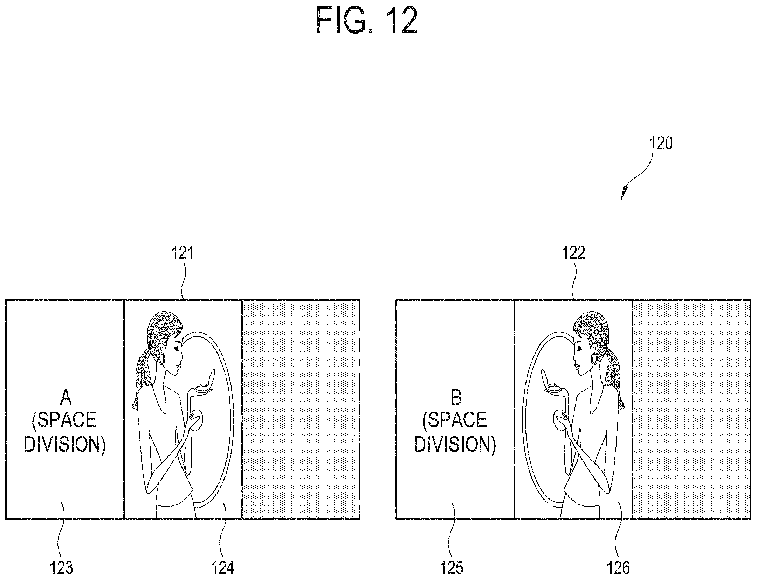

FIG. 12 is a diagram illustrating an example in which images based on space-division and reversal images are displayed on both sides of the display panel. As illustrated in FIG. 12, a display panel 120 may section a first side 121 and a second side 122 into three pairs of corresponding areas, and may display a reversal area on one area of them at either side thereof and different images on the other two areas by space division. According to an example embodiment, the display panel 120 respectively displays an image A and an image B on a second area 123 of the first side 121 and a first area 125 of the second side 122, which do not overlap each other, by space division.

Further, the display panel 120 may display reversal images on a fourth area 124 of the first side 121 and a third area 126 of the second side 122, which overlap each other. In this example, the reversal images may be images reversed left and right or images reversed up and down. For example, the reversal images displayed on the fourth area 124 and the third area 126 may be obtained by processing one image signal, and realized by turning on the area of the second backlight unit corresponding to the fourth area 124 of the first side 121 and the area of the first backlight unit corresponding to the third area 126 of the second side 122.

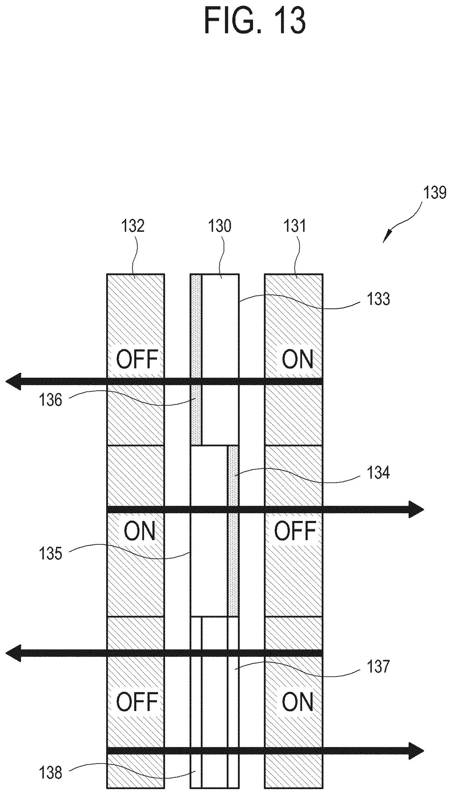

FIG. 13 is a cross-sectional view illustrating an example display panel including one liquid crystal layer and two backlight units. As illustrated in FIG. 13, a display panel 139 may display images on some areas at both sides thereof, which do not overlap each other, by space division, and display an image on only one area of the other areas at both sides thereof, which overlap each other, in a first side 133 and a second side 135 of a liquid crystal layer 130. According to an example embodiment, the display panel 139 may respectively display a first image and a second image on a first area 136 and a second area 134 by turning on an area of a first backlight unit 131 corresponding to the first area 136 at the second side 135 of the liquid crystal layer 130 and turning on an area of a second backlight unit 132 corresponding to the second area at the first side 133 of the liquid crystal layer 130 in order to display images on the both sides by space division. The second area 134 of the first side 133 and the first area 136 of the second side 135 do not overlap each other in a direction perpendicular to the first side 133 and the second side 135.

The display panel 139 may display a single image on the third area 138 of the second side 135 by turning on the area of the first backlight unit 131 corresponding to the third area 138 at the second side 135 of the liquid crystal layer 130 and turning off the area of the second backlight unit 132 corresponding to the fourth area 137 at the first side 133 of the liquid crystal layer 130, in order to display an image on only one area among the areas, which overlap each other, at either side thereof. In this example, the fourth area 137 of the first side 133 and the third area 138 of the second side 135 overlap each other in a direction perpendicular to the first side 133 and the second side 135.

The display panel 139 may display a single image on the fourth area 137 of the first side 133 by turning off the area of the first backlight unit 131 corresponding to the third area 138 at the second side 135 of the liquid crystal layer 130, and turning on the area of the second backlight unit 132 corresponding to the fourth area 137 at the first side 133 of the liquid crystal layer 130.

The display panel 139 according to an example embodiment can display an image on only one side in some overlapping areas at either side while displaying different images on the areas, which do not overlap each other, at both sides.

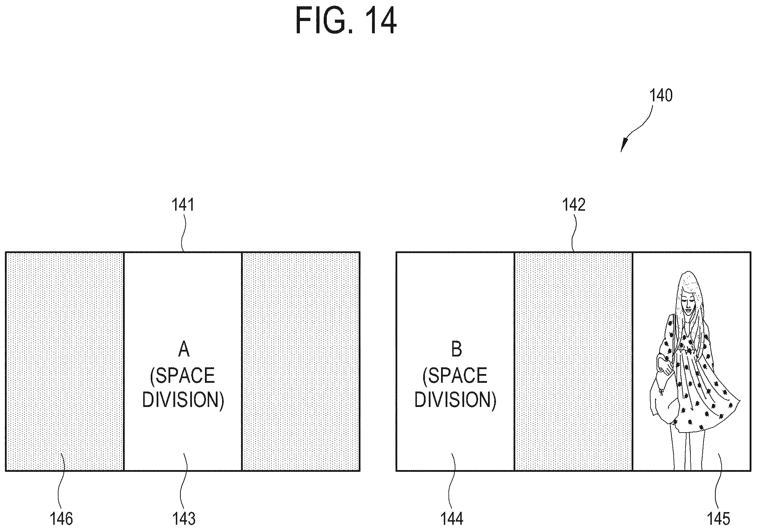

FIG. 14 is a diagram illustrating an example in which images based on space-division are displayed on both sides of a display apparatus and a single image is displayed in a partial area on one side. As illustrated in FIG. 14, a display panel 140 may section a first side 141 and a second side 142 into three pairs of corresponding areas, and may display different images based on space division on two areas at both sides and display an image on the other one area at only one side of the both sides. According to an example embodiment, the display panel 140 may respectively display an image A and an image B on a second area 143 of the first side 141 and a first area 144 of the second side 142, which so not overlap each other, by space division. In this example, the area of the second backlight unit is turned on corresponding to the second area 143 of the first side 141, and the area of the first backlight unit is turned on corresponding to the first area 144 of the second side 142.

The display panel 140 displays an image on only the third area 145 of the second side 142 between the fourth area 146 of the first side 141 and the third area 145 of the second side 142, which overlap each other, by turning on only the second backlight unit corresponding to the third area 145 of the second side 142.

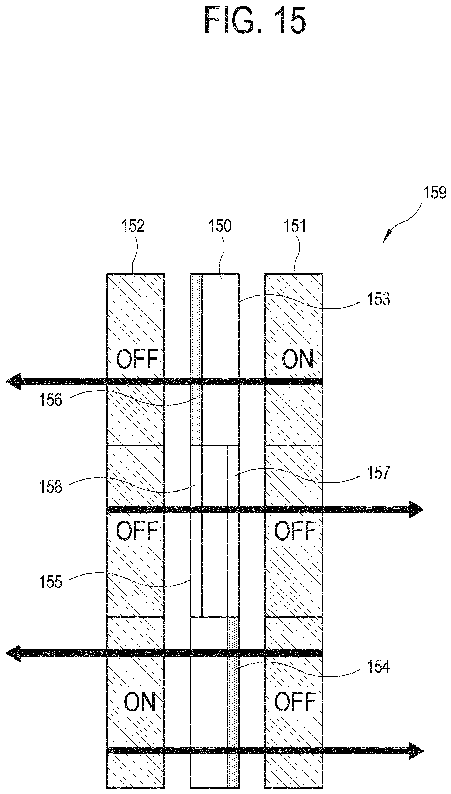

FIG. 15 is a cross-sectional view illustrating an example display panel including one liquid crystal layer and two backlight units. As illustrated in FIG. 15, at a first side 153 and a second side 155 of a liquid crystal layer 150, some areas at both sides of a display panel 159, which do not overlap each other, may be used to display images thereon by space division, and the other areas may function as transparent windows without displaying images thereon. In order to display the images at the both sides by space division, the display panel 159 according to an example embodiment may respectively display a first image and a second image on a first area 156 and a second area 154 by turning on an area of a first backlight unit 151 corresponding to a first area 156 at a second side 155 of the liquid crystal layer 150 and turning on an area of a second backlight unit 152 corresponding to a second area 154 at a first side 153 of the liquid crystal layer 150. In this example, the second area 154 of the first side 153 and the first area 156 of the second side 155 do not overlap each other in a direction perpendicular to the first side 153 and the second side 155.

In order to function as a transparent window without displaying images on the overlapped areas at both sides, the display panel 159 may serve as the transparent window without displaying images on the third area 158 and the fourth area 157 by turning off the area of the first backlight unit 151 corresponding to the third area at the second side 155 of the liquid crystal layer 150 and turning off the area of the second backlight unit 152 corresponding to the fourth area 157 at the first side 153 of the liquid crystal layer 150. For example, the liquid crystal layer 150 is achieved by a transparent LCD, and the first backlight unit 151 and the second backlight unit 152 are achieved by a highly-transparent BLU, so that the display panel 159 can serve as the transparent window through the transparent LCD and the highly-transparent BLU when the first backlight unit 151 and the second backlight unit 152 are turned off.

At the first side 153 and the second side 155 of the liquid crystal layer 150, the display panel 159 may display images on some areas, which do not overlap each other, at either side by space division, and display images on the other overlapped areas at both sides using not light from the backlight unit but instead using external light. In order to display images on the overlapped areas at both sides using external light, the display panel 159 according to an example embodiment may display the images on the third area 158 and the fourth area 157 through the external light by turning off the area of the first backlight unit 151 and the area of the second backlight unit 152 respectively corresponding to the third area 158 of the second side 155 and the fourth area of the first side 153 of the liquid crystal layer 150.

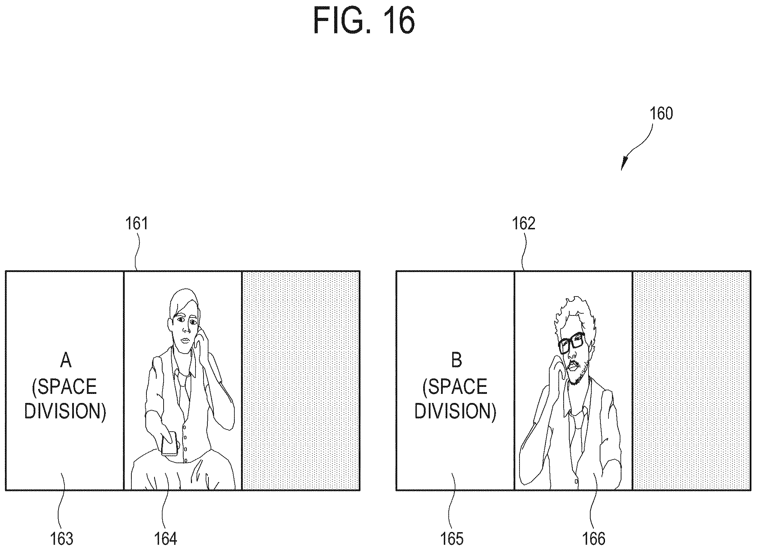

FIG. 16 is a diagram illustrating an example in which images based on space-division are displayed on both sides of a display panel and a transparent window function is performed in a partial area. As illustrated in FIG. 16, the display panel 160 may section a first side 161 and a second side 162 into three pairs of corresponding areas, and display different images based on space-division on two areas among the sectioned areas at either side and perform the transparent window function through the other one area without displaying an image at both sides. According to an example embodiment, the display panel 160 may respectively display an image A and an image B on a second area 163 of the first side 161 and a first area 165 of the second side 162, which do not overlap each other, by space division. In this example, the area of the second backlight unit is turned on corresponding to the second area 163 of the first side 161, and the area of the first backlight unit is turned on corresponding to the first area 165 of the second side 162.

The display panel 160 may not display images on the fourth area 164 of the first side 161 and the third area 166 of the second side 162, which overlap each other, but whickperform the transparent window function. In this example, the second backlight unit corresponding to the fourth area 164 of the first side 161 is turned off, and the first backlight unit corresponding to the third area 166 of the second side 162 is turned off. Thus, the display panel 160 according to an example embodiment can use some overlapped areas at both sides thereof to not display an image but to function as a transparent window through which an exterior can be seen. For example, if two users select a menu for using some areas as the transparent window while playing a game with each other through both sides of the display, the areas become transparent so that the user can see the opponent.

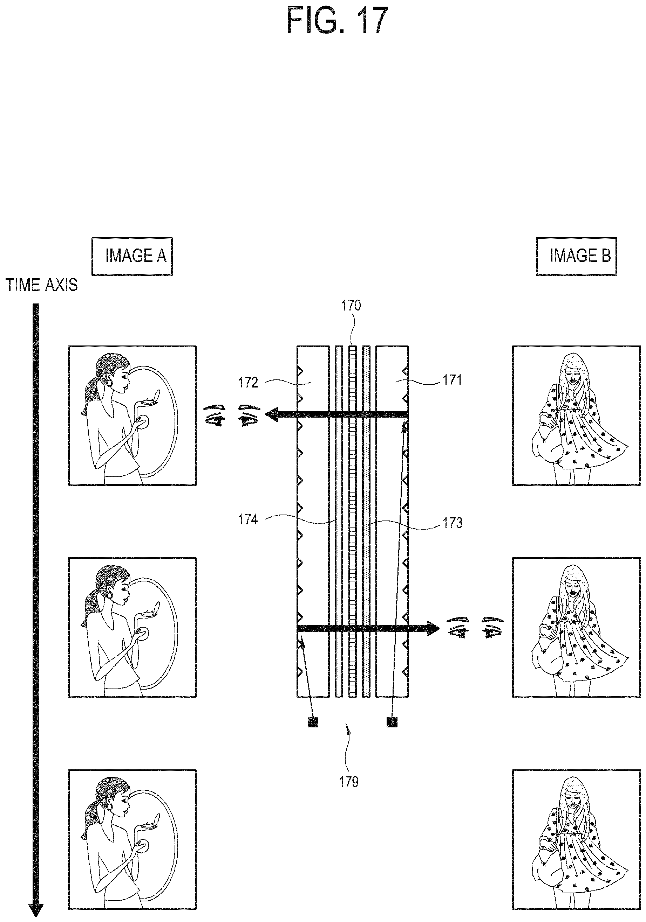

FIG. 17 is a diagram illustrating an example of a display panel for displaying images based on time-division on both sides thereof. As illustrated in FIG. 17, a display panel 179 may display images on overlapped areas at both sides by time division in a first side 173 and a second side 174 of a liquid crystal layer 170. According to an example embodiment, the display panel 179 may respectively display an image B and an image A on the first side 173 and the second side 174 by alternately turning on the first backlight unit 171 and the second backlight unit 172, which respectively correspond to the second side 174 and the first side 173 of the liquid crystal layer 170, in a cycle of predetermined time. For example, if the first backlight unit 171 and the second backlight unit 172 are driven in sync with the image A and the image B by time division, the image A and the image B are simultaneously displayed on the second side 174 and the first side 173 of the liquid crystal layer 170.

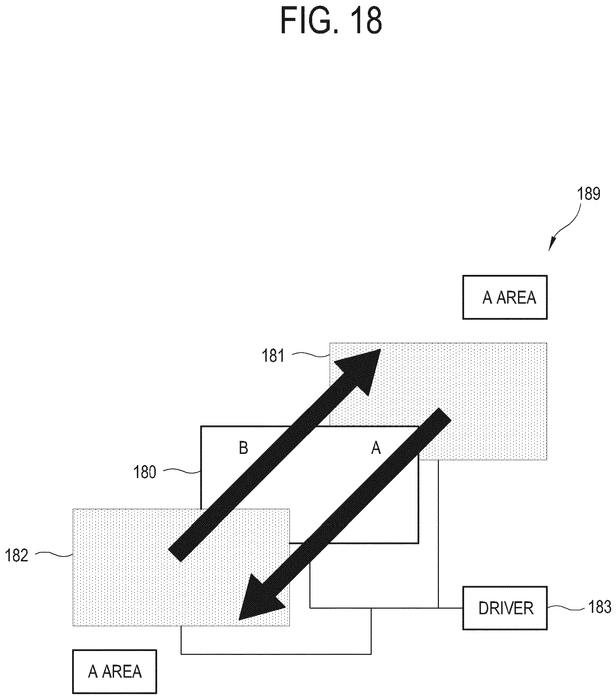

FIG. 18 is an exploded view illustrating an example display panel for displaying images based on time-division on both sides thereof. As illustrated in FIG. 18, a display panel 189 includes a liquid crystal layer 180 for displaying an image, and a first backlight unit 181 and a second backlight unit 182 arranged at opposite sides of the liquid crystal layer 180 and serving as light sources. A driver 183 drives the first backlight unit 181 and the second backlight unit 182 in sync with images displayed on the liquid crystal layer 180. According to an example embodiment, in order to display an image A and an image B on both sides of the display panel 189, the first backlight unit 181 and the second backlight unit 182 are alternately turned on in a cycle of predetermined time, thereby synchronizing the first backlight unit 181 and the second backlight unit 182 with the image A and the image B, respectively. Thus, light from the first backlight unit 181 transmits the liquid crystal layer 180 so that a user can view the image A in the A area, and light from the second backlight unit 182 transmits the liquid crystal layer 180 so that a user can view the image in the B area. Thus, according to an example embodiment, it is possible to display different images on both sides of the display panel.

As described above, a display apparatus according to an example embodiment has an effect of displaying images on both sides of a transparent display through a liquid crystal layer and two backlight units arranged at both sides of the liquid crystal layer.

Further, according to an example embodiment, when images are displayed on the both sides of the display panel, it is possible to modify the method of displaying images on both sides of the display by controlling power supplied to the two backlight units.

Although a few example embodiments have been illustrated and described, it will be appreciated by those skilled in the art that changes may be made in these example embodiments without departing from the principles of the invention, as defined by the appended claims.

## Claims

1. A display panel (49, 79) comprising:
a liquid crystal layer (40, 70) arranged to be driven to selectively transmit light based on a first image signal and a second image signal;
a first backlight unit (41, 71) arranged at a first side (43, 73) of the liquid crystal layer, and configured to provide light entering the first side of the liquid crystal layer and exiting a first area (46, 76) on a second side (45, 75) opposite the first side of the liquid crystal layer to display the first image signal; and
a second backlight unit (42, 72) arranged at the second side of the liquid crystal layer, and configured to provide light entering the second side of the liquid crystal layer and exiting a second area (44, 74) on the first side of the liquid crystal layer to display the second image signal, the second area of the first side and the first area of the second side not overlapping each other in a direction perpendicular to the first side and the second side,
wherein the display panel is configured to display the first image and the second image on the first area and the second area respectively by turning on an area of the first backlight unit corresponding to the first area at the second side of the liquid crystal layer and turning on an area of the second backlight unit corresponding to the second area at the first side of the liquid crystal layer;
**characterized in that**
the display panel further comprises input circuitry configured to receive an input,
wherein the display panel is configured to adjust the positions and sizes of the first area of the second side and the second area of the first side of the liquid crystal layer in response to the received input
.

2. The display panel according to claim 1, wherein the first backlight unit comprises a first light guide plate and a first light source, and the second backlight unit comprises a second light guide plate and a second light source,
the first light guide plate having a pattern disposed on an area corresponding to the first area at the second side of the liquid crystal layer, and the second light guide plate having a pattern disposed on an area corresponding to the second area at the first side of the liquid crystal layer.

3. The display panel according to claim 1 or 2, wherein the display panel is configured to determine a type of the first image signal and the second image signal, and to modify the first area of the second side and the second area of the first side of the liquid crystal layer based on the type of the first image signal and the second image signal.

4. The display panel according to any one of claims 1 to 3, wherein a fourth area (77) of the first side and a third area (78) of the second side of the liquid crystal layer completely overlap each other in a direction perpendicular to the first side and the second side, and
the display panel is configured to display different images on the third area and the fourth area by alternately turning on an area of the first backlight unit and an area of the second backlight unit, which respectively correspond to the third area and the fourth area, in a cycle of predetermined time.

5. The display panel according to any one of claims 1 to 3, wherein a fourth area of the first side and a third area of the second side of the liquid crystal layer completely overlap each other in a direction perpendicular to the first side and the second side, and
the display panel is configured to display at least one of: one image, or reversal images, on the third area and the fourth area by turning on an area of the first backlight unit and an area of the second backlight unit, which respectively correspond to the third area and the fourth area.

6. The display panel according to any one of claims 1 to 3, wherein a fourth area of the first side and a third area of the second side of the liquid crystal layer completely overlap each other in a direction perpendicular to the first side and the second side, and
the display panel is configured to display an image on the third area or the fourth area by turning on only one of an area of the first backlight unit and an area of the second backlight unit, which respectively correspond to the third area and the fourth area.

7. The display panel according to any one of claims 1 to 3, wherein a fourth area of the first side and a third area of the second side of the liquid crystal layer completely overlap each other in a direction perpendicular to the first side and the second side, and
the display panel is configured to control the third area or the fourth area to function as a transparent window by turning off an area of the first backlight unit and an area of the second backlight unit, which respectively correspond to the third area and the fourth area.

8. The display panel according to any one of claims 1 to 3, wherein a fourth area of the first side and a third area of the second side of the liquid crystal layer completely overlap each other in a direction perpendicular to the first side and the second side, and
the display panel is configured to turn off an area of the first backlight unit and an area of the second backlight unit, which respectively correspond to the third area and the fourth area, and to use external light to display images on the third area and the fourth area.

9. A display apparatus (10) comprising:
signal receiving circuitry (11) configured to receive a first image signal and a second image signal;
a signal processor (12) configured to process the received first and second image signals; and
a display panel configured to display a first image based on the processed first image signal and a second image based on the processed second image signal,
the display panel being according to any one of claims 1 to 8.

## Patentansprüche

1. Anzeigefeld (49, 79), das Folgendes umfasst:
eine Flüssigkristallschicht (40, 70), die dazu angeordnet ist, angesteuert zu werden, um Licht basierend auf einem ersten Bildsignal und einem zweiten Bildsignal selektiv durchzulassen;
eine erste Hintergrundbeleuchtungseinheit (41, 71), die auf einer ersten Seite (43, 73) der Flüssigkristallschicht angeordnet ist und dazu konfiguriert ist, Licht bereitzustellen, das in die erste Seite der Flüssigkristallschicht eintritt und einen ersten Bereich (46, 76) auf einer der ersten Seite der Flüssigkristallschicht gegenüberliegenden zweiten Seite (45, 75) verlässt, um das erste Bildsignal anzuzeigen; und
eine zweite Hintergrundbeleuchtungseinheit (42, 72), die auf einer zweiten Seite der Flüssigkristallschicht angeordnet ist und dazu konfiguriert ist, Licht bereitzustellen, das in die zweite Seite der Flüssigkristallschicht eintritt und einen zweiten Bereich (44, 74) auf der ersten Seite der Flüssigkristallschicht verlässt, um das zweite Bildsignal anzuzeigen, wobei der zweite Bereich der ersten Seite und der erste Bereich der zweiten Seite in einer zu der ersten Seite und der zweiten Seite senkrechten Richtung einander nicht überlappen,
wobei das Anzeigefeld dazu konfiguriert ist, das erste Bild und das zweite Bild jeweils auf dem ersten Bereich bzw. dem zweiten Bereich durch Einschalten eines dem ersten Bereich auf der zweite Seite der Flüssigkristallschicht entsprechenden Bereichs der ersten Hintergrundbeleuchtungseinheit und Einschalten eines dem zweiten Bereich auf der ersten Seite der Flüssigkristallschicht entsprechenden Bereichs der zweiten Hintergrundbeleuchtungseinheit anzuzeigen;
**dadurch gekennzeichnet, dass**
das Anzeigefeld weiter eine Eingangsschaltung umfasst, die dazu konfiguriert ist, einen Eingang zu empfangen,
wobei das Anzeigefeld dazu konfiguriert ist, die Positionen und Größen des ersten Bereichs der zweiten Seite und des zweiten Bereichs der ersten Seite der Flüssigkristallschicht als Reaktion auf dem empfangenen Eingang anzupassen.

2. Anzeigefeld nach Anspruch 1, wobei die erste Hintergrundbeleuchtungseinheit eine erste Lichtleitplatte und eine erste Lichtquelle umfasst und die zweite Hintergrundbeleuchtungseinheit eine zweite Lichtleitplatte und eine zweite Lichtquelle umfasst,
wobei die erste Lichtleitplatte ein Muster aufweist, das auf einem dem ersten Bereich auf der zweiten Seite der Flüssigkristallschicht entsprechenden Bereich angeordnet ist, und die zweite Lichtleitplatte ein Muster aufweist, das auf einem dem zweiten Bereich auf der ersten Seite der Flüssigkristallschicht entsprechenden Bereich angeordnet ist.

3. Anzeigefeld nach Anspruch 1 oder 2, wobei das Anzeigefeld dazu konfiguriert ist, einen Typ des ersten Bildsignals und des zweiten Bildsignals zu bestimmen und den ersten Bereich der zweiten Seite und den zweiten Bereich der ersten Seite der Flüssigkristallschicht basierend auf dem Typ des ersten Bildsignals und des zweiten Bildsignals zu modifizieren.

4. Anzeigefeld nach einem der Ansprüche 1 bis 3, wobei ein vierter Bereich (77) der ersten Seite und ein dritter Bereich (78) der zweiten Seite der Flüssigkristallschicht in einer zu der ersten Seite und der zweiten Seite senkrechten Richtung einander vollständig überlappen, und
das Anzeigefeld dazu konfiguriert ist, durch abwechselndes Einschalten eines Bereichs der ersten Hintergrundbeleuchtungseinheit und eines Bereich der zweiten Hintergrundbeleuchtungseinheit, die jeweils dem dritten Bereich bzw. dem vierten Bereich entsprechen, in einem Zyklus vorbestimmter Dauer, unterschiedliche Bilder auf dem dritten Bereich und dem vierten Bereich anzuzeigen.

5. Anzeigefeld nach einem der Ansprüche 1 bis 3, wobei ein vierter Bereich der ersten Seite und ein dritter Bereich der zweiten Seite der Flüssigkristallschicht in einer zu der ersten Seite und der zweiten Seite senkrechten Richtung einander vollständig überlappen, und
das Anzeigefeld dazu konfiguriert ist, mindestens eines der Folgenden anzuzeigen: ein Bild oder Umkehrbilder auf dem dritten Bereich und dem vierten Bereich durch Einschalten eines Bereichs der ersten Hintergrundbeleuchtungseinheit und eines Bereichs der zweiten Hintergrundbeleuchtungseinheit, die jeweils dem dritten Bereich bzw. dem vierten Bereich entsprechen.

6. Anzeigefeld nach einem der Ansprüche 1 bis 3, wobei ein vierter Bereich der ersten Seite und ein dritter Bereich der zweiten Seite der Flüssigkristallschicht in einer zu der ersten Seite und der zweiten Seite senkrechten Richtung einander vollständig überlappen, und
das Anzeigefeld dazu konfiguriert ist, durch Einschalten von nur einem von einem Bereich der ersten Hintergrundbeleuchtungseinheit und einem Bereich der zweiten Hintergrundbeleuchtungseinheit, die jeweils dem dritten Bereich bzw. dem vierten Bereich entsprechen, ein Bild auf dem dritten Bereich oder dem vierten Bereich anzuzeigen.

7. Anzeigefeld nach einem der Ansprüche 1 bis 3, wobei ein vierter Bereich der ersten Seite und ein dritter Bereich der zweiten Seite der Flüssigkristallschicht in einer zu der ersten Seite und der zweiten Seite senkrechten Richtung einander vollständig überlappen, und
das Anzeigefeld dazu konfiguriert ist, durch Ausschalten eines Bereichs der ersten Hintergrundbeleuchtungseinheit und eines Bereichs der zweiten Hintergrundbeleuchtungseinheit, die jeweils dem dritten Bereich bzw. dem vierten Bereich entsprechen, den dritten Bereich oder den vierten Bereich dazu zu steuern, als durchsichtiges Fenster zu fungieren.

8. Anzeigefeld nach einem der Ansprüche 1 bis 3, wobei ein vierter Bereich der ersten Seite und ein dritter Bereich der zweiten Seite der Flüssigkristallschicht in einer zu der ersten Seite und der zweiten Seite senkrechten Richtung einander vollständig überlappen, und
das Anzeigefeld dazu konfiguriert ist, einen Bereich der ersten Hintergrundbeleuchtungseinheit und einen Bereich der zweiten Hintergrundbeleuchtungseinheit, die jeweils dem dritten Bereich bzw. dem vierten Bereich entsprechen, auszuschalten und externes Licht zum Anzeigen von Bildern auf dem dritten Bereich und dem vierten Bereich zu verwenden.

9. Anzeigevorrichtung (10), die Folgendes umfasst:
eine Signalempfangsschaltung (11), die dazu konfiguriert ist, ein erstes Bildsignal und ein zweites Bildsignal zu empfangen;
einen Signalprozessor (12), der dazu konfiguriert ist, das empfange erste und das empfangene zweite Bildsignal zu verarbeiten; und
ein Anzeigefeld, das dazu konfiguriert ist, ein erstes Bild basierend auf dem verarbeiteten ersten Bildsignal und ein zweites Bild basierend auf dem verarbeiteten zweiten Bildsignal anzuzeigen, wobei das Anzeigefeld nach einem der Ansprüche 1 bis 8 ist.

## Revendications

1. Panneau d'affichage (49, 79) comprenant :
une couche de cristaux liquides (40, 70) conçue pour être amenée à transmettre de la lumière de manière sélective sur la base d'un premier signal d'image et d'un second signal d'image ;
une première unité de rétroéclairage (41, 71) située au niveau d'un premier côté (43, 73) de la couche de cristaux liquides, et configurée pour fournir de la lumière entrant par le premier côté de la couche de cristaux liquides et sortant par une première région (46, 76) sur un second côté (45, 75) opposé au premier côté de la couche de cristaux liquides pour afficher le premier signal d'image ; et
une seconde unité de rétroéclairage (42, 72) située au niveau du second côté de la couche de cristaux liquides, et configurée pour fournir de la lumière entrant par le second côté de la couche de cristaux liquides et sortant par une deuxième région (44, 74) sur le premier côté de la couche de cristaux liquides pour afficher le second signal d'image, la deuxième région du premier côté et la première région du second côté ne se chevauchant pas mutuellement dans une direction perpendiculaire au premier côté et au second côté,
le panneau d'affichage étant configuré pour afficher respectivement la première image et la seconde image sur la première région et la deuxième région en allumant une région de la première unité de rétroéclairage correspondant à la première région au niveau du second côté de la couche de cristaux liquides, et en allumant une région de la seconde unité de rétroéclairage correspondant à la deuxième région au niveau du premier côté de la couche de cristaux liquides ;
le panneau d'affichage **étant caractérisé en ce que** :
le panneau d'affichage comprend en outre une circuiterie d'entrée configurée pour recevoir une entrée,
le panneau d'affichage étant configuré pour régler les positions et les tailles de la première région du second côté et de la deuxième région du premier côté de la couche de cristaux liquides en réponse à l'entrée reçue.

2. Panneau d'affichage selon la revendication 1, dans lequel la première unité de rétroéclairage comprend une première plaque de guidage de lumière et une première source de lumière, et la seconde unité de rétroéclairage comprend une seconde plaque de guidage de lumière et une seconde source de lumière,
la première plaque de guidage de lumière ayant un patron disposé sur une région correspondant à la première région au niveau du second côté de la couche de cristaux liquides, et la seconde plaque de guidage de lumière ayant un patron disposé sur une région correspondant à la deuxième région au niveau du premier côté de la couche de cristaux liquides.

3. Panneau d'affichage selon la revendication 1 ou 2, le panneau d'affichage étant configuré pour déterminer un type du premier signal d'image et du second signal d'image, et pour modifier la première région du second côté et la deuxième région du premier côté de la couche de cristaux liquides sur la base du type du premier signal d'image et du second signal d'image.

4. Panneau d'affichage selon l'une quelconque des revendications 1 à 3, dans lequel une quatrième région (77) du premier côté et une troisième région (78) du second côté de la couche de cristaux liquides se chevauchent complètement mutuellement dans une direction perpendiculaire au premier côté et au second côté, et
le panneau d'affichage est configuré pour afficher différentes images sur la troisième région et la quatrième région en allumant en alternance une région de la première unité de rétroéclairage et une région de la seconde unité de rétroéclairage, qui correspondent respectivement à la troisième région et à la quatrième région, dans un cycle de temps prédéterminé.

5. Panneau d'affichage selon l'une quelconque des revendications 1 à 3, dans lequel une quatrième région du premier côté et une troisième région du second côté de la couche de cristaux liquides se chevauchent complètement mutuellement dans une direction perpendiculaire au premier côté et au second côté, et
le panneau d'affichage est configuré pour afficher au moins une image parmi : une image et des images inversées, sur la troisième région et la quatrième région en allumant une région de la première unité de rétroéclairage et une région de la seconde unité de rétroéclairage, qui correspondent respectivement à la troisième région et à la quatrième région.

6. Panneau d'affichage selon l'une quelconque des revendications 1 à 3, dans lequel une quatrième région du premier côté et une troisième région du second côté de la couche de cristaux liquides se chevauchent complètement mutuellement dans une direction perpendiculaire au premier côté et au second côté, et
le panneau d'affichage est configuré pour afficher une image sur la troisième région ou la quatrième région en allumant uniquement une région de la première unité de rétroéclairage ou une région de la seconde unité de rétroéclairage, qui correspondent respectivement à la troisième région et à la quatrième région.

7. Panneau d'affichage selon l'une quelconque des revendications 1 à 3, dans lequel une quatrième région du premier côté et une troisième région du second côté de la couche de cristaux liquides se chevauchent complètement mutuellement dans une direction perpendiculaire au premier côté et au second côté, et
le panneau d'affichage est configuré pour commander la troisième région ou la quatrième région pour qu'elle fonctionne comme une fenêtre transparente en éteignant une région de la première unité de rétroéclairage et une région de la seconde unité de rétroéclairage, qui correspondent respectivement à la troisième région et à la quatrième région.

8. Panneau d'affichage selon l'une quelconque des revendications 1 à 3, dans lequel une quatrième région du premier côté et une troisième région du second côté de la couche de cristaux liquides se chevauchent complètement mutuellement dans une direction perpendiculaire au premier côté et au second côté, et
le panneau d'affichage est configuré pour éteindre une région de la première unité de rétroéclairage et une région de la seconde unité de rétroéclairage, qui correspondent respectivement à la troisième région et à la quatrième région, et pour utiliser une lumière externe pour afficher des images sur la troisième région et la quatrième région.

9. Appareil d'affichage (10), comprenant :
une circuiterie de réception de signal (11) configurée pour recevoir un premier signal d'image et un second signal d'image ;
un dispositif de traitement de signal (12) configuré pour traiter les premier et second signaux d'image reçus ; et
un panneau d'affichage configuré pour afficher une première image sur la base du premier signal d'image traité et une seconde image sur la base du second signal d'image traité, le panneau d'affichage étant selon l'une quelconque des revendications 1 à 8.
